# EUROPEAN PATENT APPLICATION

(11) **EP 4 764 473 A1**
(43) Date of publication of application: **24.06.2026**
(21) Application number: 24855737.3
(22) Date of filing: 16.08.2024
(51) Int. Cl.: G01N 23/046

(54) **ROTATING DEVICE FOR COMPUTED TOMOGRAPHY (CT) SCANNER AND CT SCANNER**

(30) Priority: 18.08.2023 CN 202311047137
(71) Applicant: Derek (Tianjin) Machinery Manufacturing Co., Ltd, Tianjin 301701 (CN)
(72) Inventor: ZHOU, Zhiyang, Tianjin 301701 (CN); ZOU, Yimei, Tianjin 301701 (CN)
(74) Representative: karo IP
(86) International application number: PCT/CN2024/112698
(87) International publication number: WO 2025/040013

(57) **Abstract**

A rotating device for a computed tomography (CT) scanner and a CT scanner are provided. The rotating device for a CT scanner includes a connection base (1) and a detector assembly (2). The connection base (1) is a ring base (11) of which an outer peripheral wall is surrounded by a connection frame (12). A mounting portion is disposed on the connection frame (12). The mounting portion includes a detector mounting portion, and the detector assembly (2) is disposed at the detector mounting portion. The detector mounting portion is in communication with a ray receiving slot (112). The detector mounting portion includes a plurality of detector sub-mounting portions. A separating structure is disposed between every two adjacent detector sub-mounting portions. The detector assembly (2) includes a plurality of detection units. The plurality of detection units are mounted on the plurality of detector sub-mounting portions in one-to-one correspondence.

## Description

This application claims priority to Chinese Patent Application No. 202311047137.8, filed with the China National Intellectual Property Administration on August 18, 2023, which is incorporated herein by reference in its entirety.

### TECHNICAL FIELD

This application relates to the field of radiation detection technologies, for example, to a rotating device for a computed tomography (CT) scanner and a CT scanner.

### BACKGROUND

A CT scanner includes a fixed device and a rotating device. The rotating device is mounted on a slip ring bearing of the fixed device. A driving motor is used to rotate the rotating device, so as to implement tomographic scanning.

A radiation source and a detector in a rotating device for a CT scanner in the related art are mounted on a ring-shaped support frame. Due to the broad range of X-rays emitted by the radiation source, the detector occupies a large space on the ring-shaped support frame, so the opening that is provided in the ring-shaped support frame and in communication with the detector is also large, which compromises the rigidity and strength of the support frame and increases the difficulty in fabricating the support frame.

### SUMMARY

This application provides a rotating device for a CT scanner and a CT scanner, to reduce the difficulty in fabricating the rotating device while ensuring the rigidity and strength of the rotating device.

This application provides a rotating device for a CT scanner, including:
a connection base, including a ring base and a connection frame, the connection frame being disposed around an outer peripheral wall of the ring base, and a mounting portion being disposed on the connection frame; and
a detector assembly, the mounting portion including a detector mounting portion, the detector assembly being disposed at the detector mounting portion, a ray receiving slot being provided on the ring base, and the detector mounting portion being in communication with the ray receiving slot.

The detector mounting portion includes a plurality of detector sub-mounting portions sequentially disposed along a circumferential direction of the ring base. A separating structure is disposed between every two adjacent detector sub-mounting portions. The detector assembly includes a plurality of detection units. The plurality of detection units are mounted on the plurality of detector sub-mounting portions in one-to-one correspondence.

As an optional solution of the rotating device for a CT scanner, the plurality of detector sub-mounting portions include a main detector mounting portion and two auxiliary detector mounting portions, and the two auxiliary detector mounting portions are respectively disposed on two sides of the main detector mounting portion.

The separating structure includes an end plate. The end plate is mounted over the ray receiving slot, and the main detector mounting portion is formed between the two end plates.

As an optional solution of the rotating device for a CT scanner, the plurality of detection units include a main detection unit and two auxiliary detection units. The main detection unit is mounted on the main detector mounting portion, and the auxiliary detection units are mounted on the auxiliary detector mounting portions through the mounting bases.

Each of the auxiliary detection units is correspondingly provided with a mounting base. The auxiliary detection unit is mounted in the mounting base, and the mounting base is detachably connected to the auxiliary detector mounting portion.

As an optional solution of the rotating device for a CT scanner, the mounting base includes a base body and a carrying plate. The auxiliary detection unit is mounted on the carrying plate. The carrying plate is disposed on the base body. The base body is detachably connected to the auxiliary detector mounting portion.

As an optional solution of the rotating device for a CT scanner, the carrying plate is detachably connected to the base body.

As an optional solution of the rotating device for a CT scanner, the detector assembly further includes a cover, and the cover covers the main detection unit and the base body.

As an optional solution of the rotating device for a CT scanner, an insertion limiting slot is formed between the auxiliary detector mounting portion and the end plate. The base body is provided with an insertion limiting portion. The insertion limiting portion cooperates with the insertion limiting slot such that the base body is connected into the auxiliary detector mounting portion.

As an optional solution of the rotating device for a CT scanner, the base body includes a mounting plate, a first connection plate, and a second connection plate. The carrying plate is detachably connected to the mounting plate. The first connection plate is arranged at one end of the mounting plate and disposed perpendicular to the mounting plate. The carrying plate protrudes from one end of the mounting plate and forms the insertion limiting portion with the first connection plate. The mounting plate is insertion-connected into the insertion limiting slot. The first connection plate abuts against the end plate. The second connection plate is bent downward from the other end of the mounting plate to abut against end surfaces of the first reference frame and the second reference frame.

As an optional solution of the rotating device for a CT scanner, a connection rib plate is further disposed between the first connection plate and the mounting plate, and the cover is connected to the connection rib plate.

As an optional solution of the rotating device for a CT scanner, the rotating device further includes a radiation source, and the radiation source is configured to emit X-rays. The mounting portion further includes a radiation source mounting portion. The radiation source mounting portion and the main detector mounting portion are disposed oppositely on an outer peripheral wall of the ring base. The radiation source is mounted on the radiation source mounting portion.

The ring base is further provided with a ray emitting slot. The ray emitting slot is in communication with the radiation source mounting portion, and the X-rays emitted by the radiation source pass through the ray emitting slot and the ray receiving slot to the detector assembly.

As an optional solution of the rotating device for a CT scanner, the connection frame includes a first reference frame and a second reference frame. The first reference frame and the second reference frame both surround the outer peripheral wall of the ring base and are disposed at an interval along an axial direction of the ring base. The mounting portion is formed between the first reference frame and the second reference frame.

The ray emitting slot and the ray receiving slot are both located between the first reference frame and the second reference frame, and the ray emitting slot and the ray receiving slot each include a first side wall and a second side wall that are disposed at an interval along the axial direction of the ring base. The first side wall is parallel to a side wall of the first reference frame, and the second side wall is parallel to a side wall of the second reference frame.

As an optional solution of the rotating device for a CT scanner, along the axial direction of the ring base, the first reference frame and the second reference frame are disposed in parallel.

As an optional solution of the rotating device for a CT scanner, along the axial direction of the ring base, the first reference frame and the second reference frame are disposed at a preset angle, and both the first reference frame and the second reference frame extend from a central point of the radiation source mounting portion toward the main detector mounting portion.

As an optional solution of the rotating device for a CT scanner, an inner wall of the ray emitting slot and an inner wall of the ray receiving slot are both provided with a first ray shielding coating, and an inner peripheral wall of the ring base is provided with a second ray shielding coating. The thickness of the first ray shielding coating is greater than the thickness of the second ray shielding coating.

As an optional solution of the rotating device for a CT scanner, the inner peripheral wall of the ring base is provided as a smooth surface.

As an optional solution of the rotating device for a CT scanner, the rotating device further includes an integrated electronic control assembly and a cooling assembly. The integrated electronic control assembly is configured to control the radiation source and provide electric energy, and the cooling assembly is configured to dissipate heat for the radiation source.

The mounting portion further includes an integrated assembly mounting portion and a cooling assembly mounting portion. The integrated assembly mounting portion and the cooling assembly mounting portion are respectively located on two sides of the radiation source mounting portion. The integrated electronic control assembly is disposed at the integrated assembly mounting portion, and the cooling assembly is disposed at the cooling assembly mounting portion.

As an optional solution of the rotating device for a CT scanner, the mounting portion includes plurality of mounting bosses, and the radiation source, the integrated electronic control assembly, and the cooling assembly are all mounted on the mounting bosses.

As an optional solution of the rotating device for a CT scanner, the mounting bosses include first mounting bosses and second mounting bosses. The first mounting bosses are disposed across the first reference frame and the second reference frame. The radiation source mounting portion includes the two first mounting bosses that are disposed oppositely, and the radiation source is mounted on the two first mounting bosses.

The second mounting bosses are disposed on end surfaces or one side of the first reference frame and the second reference frame. The integrated assembly mounting portion and the cooling assembly mounting portion each are provided with four of the second mounting bosses. The integrated electronic control assembly and the cooling assembly are respectively mounted on the four second mounting bosses.

This application further provides a CT scanner. The CT scanner includes a fixed device and the rotating device for a CT scanner according to any one of the foregoing solutions. The fixed device includes a support frame and a slip ring bearing. The support frame is provided with a mounting hole. The slip ring bearing is disposed in the mounting hole. The slip ring bearing is connected to the rotating device.

### BRIEF DESCRIPTION OF THE DRAWINGS

FIG. 1 is a schematic structural diagram of a CT scanner according to Embodiment I of this application;
FIG. 2 is a schematic structural diagram of another CT scanner according to Embodiment I of this application;
FIG. 3 is a schematic structural diagram of a fixed device according to Embodiment I of this application;
FIG. 4 is a schematic structural diagram of another fixed device according to Embodiment I of this application;
FIG. 5 is a schematic structural diagram of a rotating device for a CT scanner according to Embodiment I of this application;
FIG. 6 is a schematic structural diagram of another rotating device for a CT scanner according to Embodiment I of this application;
FIG. 7 is a schematic structural diagram of a connection base according to Embodiment I of this application;
FIG. 8 is a schematic structural diagram of another connection base according to Embodiment I of this application;
FIG. 9 is a schematic structural diagram of a main detection unit according to Embodiment I of this application;
FIG. 10 is a schematic structural diagram of another connection base according to Embodiment I of this application;
FIG. 11 is a schematic assembly view of an auxiliary detection unit and a mounting base according to Embodiment I of this application;
FIG. 12 is a schematic assembly view of another auxiliary detection unit and a mounting base according to Embodiment I of this application;
FIG. 13 is a side view of an outer peripheral wall of a connection base according to Embodiment I of this application;
FIG. 14 is a side view of an inner peripheral wall of a connection base according to Embodiment I of this application;
FIG. 15 is a schematic structural diagram of a connection base according to Embodiment II of this application;
FIG. 16 is a schematic structural diagram of another connection base according to Embodiment II of this application;
FIG. 17 is a side view of an outer peripheral wall of a connection base according to Embodiment II of this application; and
FIG. 18 is a side view of an inner peripheral wall of a connection base according to Embodiment II of this application.

In the figures:
100. fixed device; 101. support frame; 102. slip ring bearing; 1011. mounting hole;
200. driving device; 201. driving motor; 202. conveyor belt;
300. rotating device;
1. connection base; 11. ring base; 111. ray emitting slot; 112. ray receiving slot; 12. connection frame; 121. first reference frame; 122. second reference frame; 123. end plate; 124. insertion limiting slot; 125. mounting boss; 1251. first mounting boss; 1252. second mounting boss; 126. support plate; 13. rib; 14. main detector mounting portion; 15. auxiliary detector mounting portion;
2. detector assembly; 21. main detection unit; 211. main detection sheet; 22. auxiliary detection unit; 221. auxiliary detection sheet;
3. mounting base; 31. base body; 311. mounting plate; 312. first connection plate; 313. second connection plate; 314. connection rib plate; 32. carrying plate;
4. radiation source; 41. radiation source mounting portion;
5. integrated electronic control assembly; 51. integrated assembly mounting portion;
6. cooling assembly; 61. cooling assembly mounting portion; and
7. cover.

### DETAILED DESCRIPTION

The following describes embodiments of this application. Examples of the embodiments are shown in the accompanying drawings. The same or similar reference numerals indicate the same or similar elements or elements having the same or similar functions throughout. The embodiments described below with reference to the accompanying drawings are exemplary and are intended to explain this application and should not be construed as limiting this application.

In the description of this application, orientation or position relationships indicated by terms such as "center", "upper", "lower", "left", "right", "vertical", "horizontal", "inner", and "outer" are based on orientation or position relationships shown in the accompanying drawings, and are merely for ease of describing this application and simplifying description, rather than indicating or implying that the mentioned device or element must have a particular orientation or must be constructed and operated in a particular orientation. Therefore, such terms should not be construed as limiting this application. In addition, the terms "first" and "second" are merely used for the purpose of description and should not be construed as indicating or implying relative importance. The terms "first position" and "second position" are two different positions.

Unless otherwise specified and limited, the terms such as "mount", "connect", "couple", and "fix" should be understood broadly, which, for example, may refer to a fixed connection or a detachable connection; which may refer to a mechanical connection or an electrical connection; which may refer to a direct connection or an indirect connection via an intermediate medium; which may also refer to a communication between the insides of two elements or an interaction relationship between the two elements. Meanings of the foregoing terms in this application may be understood according to specific situations.

Unless otherwise specified and limited, the first feature being "above" or "below" the second feature may include that the first feature and the second feature are in direct contact, or may include that the first feature and the second feature are not in direct contact but are in contact through another feature between the first feature and the second feature. Moreover, the first feature being "above", "over", and "on" the second feature includes that the first feature is right above or obliquely above the second feature, or merely indicates that the level of the first feature is higher than the level of the second feature. The first feature being "below", "under", and "beneath" the second feature includes that the first feature is directly below or obliquely below the second feature, or merely indicates that the level of the first feature is lower than the level the second feature.

The following describes the technical solutions of this application by using implementations with reference to the accompanying drawings.

### Embodiment I

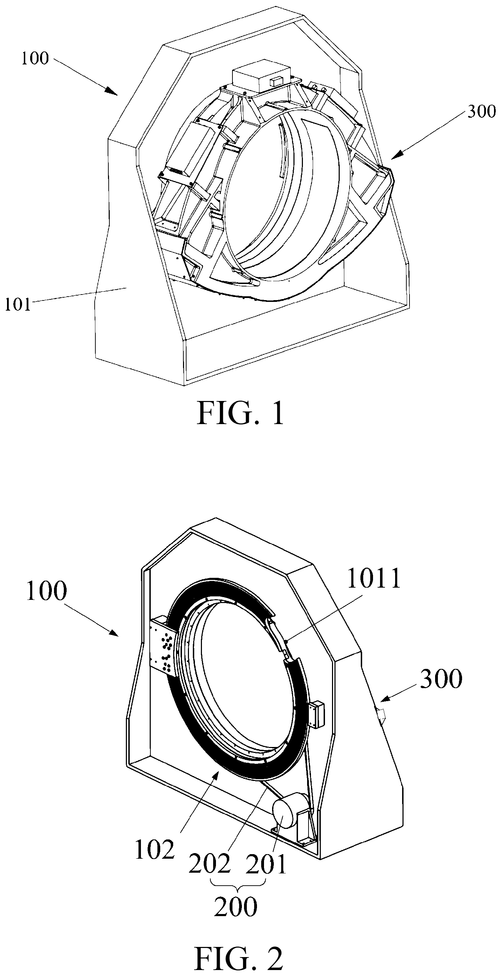

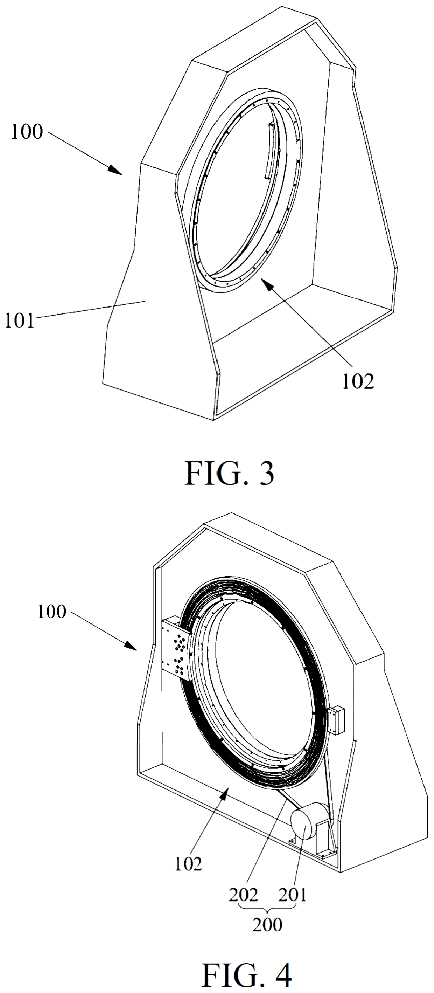

As shown in FIG. 1 to FIG. 4, this embodiment provides a CT scanner. The CT scanner includes a fixed device 100, a rotating device 300, and a driving device 200. The fixed device 100 includes a support frame 101 and a slip ring bearing 102. The support frame 101 is provided with a mounting hole 1011. The slip ring bearing 102 is disposed in the mounting hole 1011. The slip ring bearing 102 is connected to the rotating device 300. The driving device 200 includes a driving motor 201, belt pulleys, and a conveyor belt 202. The driving motor 201 is fixed to a support frame 101. A spindle of the driving motor 201 is connected to the belt pulleys. The conveyor belt 202 is configured to connect the belt pulleys and the slip ring bearing 102. The rotating device 300 is mounted on the slip ring bearing 102. The driving motor 201 drives the belt pulleys to rotate through the spindle. The belt pulleys drive the slip ring bearing 102 to rotate through the conveyor belt 202. Further, the rotating device 300 is driven to rotate, thereby implementing tomographic scanning.

This embodiment provides a CT scanner. The rotating device for a CT scanner includes: a connection base 1, including a ring base 11 and a connection frame 12, the connection frame 12 being disposed around an outer peripheral wall of the ring base 11, and a mounting portion being disposed on the connection frame 12; and a detector assembly 2, the mounting portion including a detector mounting portion, the detector assembly 2 being disposed at the detector mounting portion, a ray receiving slot 112 being provided on the ring base 11, and the detector mounting portion being in communication with the ray receiving slot 112. The detector mounting portion includes a plurality of detector sub-mounting portions sequentially disposed along a circumferential direction of the ring base 11. A separating structure is disposed between every two adjacent detector sub-mounting portions. The detector assembly 2 includes a plurality of detection units. The plurality of detection units are mounted on the plurality of detector sub-mounting portions in one-to-one correspondence.

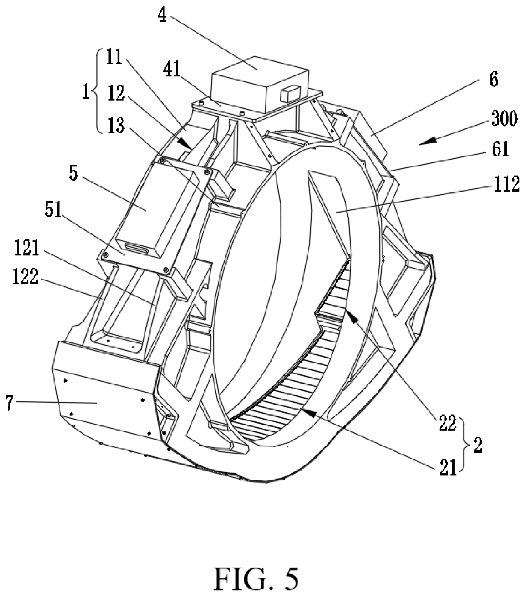

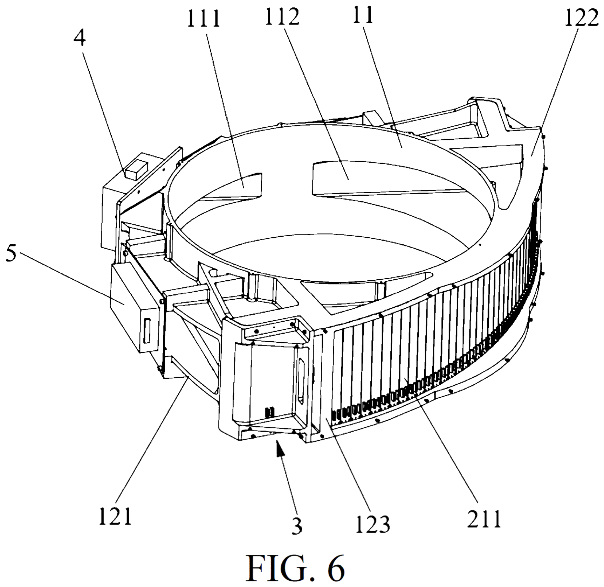

As shown in FIG. 5 to FIG. 6, this embodiment provides a rotating device for a CT scanner, applied to the above-described CT scanner. The rotating device for a CT scanner includes a radiation source 4, an integrated electronic control assembly 5, a cooling assembly 6, a detector assembly 2, and a connection base 1. The radiation source 4 is configured to emit X-rays. The detector assembly 2 can receive the X-rays and convert energy of the X-rays into a recordable electrical signal to make a judgment on an inspected object. The integrated electronic control assembly 5 is configured to control the radiation source 4 and provide electric energy, and the cooling assembly 6 is configured to dissipate heat for the radiation source 4. The radiation source 4, the integrated electronic control assembly 5, the cooling assembly 6, and the detector assembly 2 are all disposed on an outer peripheral wall of the connection base 1. The radiation source 4 and the detector assembly 2 are disposed oppositely, and the detector assembly 2 can receive X-rays within a range of rays emitted by the radiation source 4. The integrated electronic control assembly 5 and the cooling assembly 6 are respectively disposed on two sides of the radiation source 4.

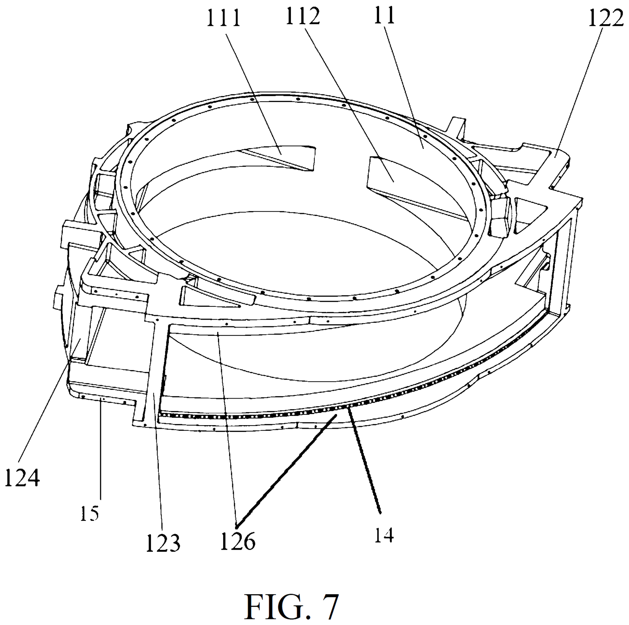

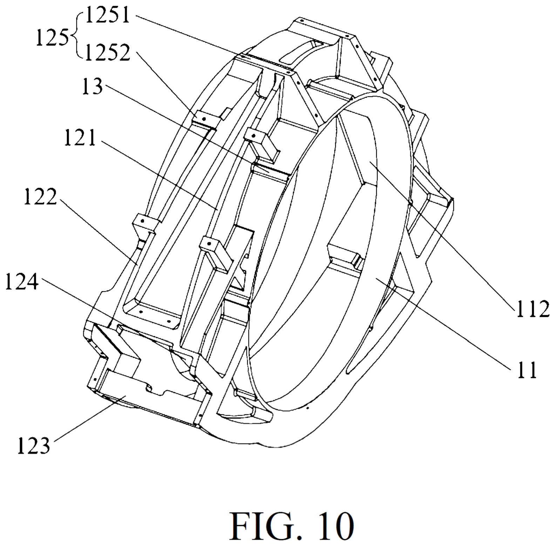

For example, as shown in FIG. 7 to FIG. 10, the connection base 1 includes a ring base 11 and a connection frame 12. The connection frame 12 is disposed around an outer peripheral wall of the ring base 11, and a mounting portion is disposed on the connection frame 12. The mounting portion includes a radiation source mounting portion 41, a detector mounting portion, an integrated assembly mounting portion 51, and a cooling assembly mounting portion 61. The radiation source mounting portion 41 and the detector mounting portion are disposed oppositely on an outer peripheral wall of the ring base 11. The radiation source 4 is mounted at the radiation source mounting portion 41. The detector assembly 2 is mounted at the detector mounting portion. The integrated assembly mounting portion 51 and the cooling assembly mounting portion 61 are respectively located on two sides of the radiation source mounting portion 41. The integrated electronic control assembly 5 is disposed at the integrated assembly mounting portion 51. The cooling assembly 6 is disposed at the cooling assembly mounting portion 61. The radiation source mounting portion 41 and the main detector mounting portion 14 are disposed oppositely on the outer peripheral wall of the ring base 11.

For example, the connection frame 12 includes a first reference frame 121 and a second reference frame 122. The first reference frame 121 and the second reference frame 122 both surround the outer peripheral wall of the ring base 11 and are disposed at an interval along an axial direction of the ring base 11. The mounting portion is formed between the first reference frame 121 and the second reference frame 122.

For example, the mounting portion includes a plurality of mounting bosses 125. The radiation source 4, the integrated electronic control assembly 5, and the cooling assembly 6 are all mounted on the mounting bosses 125. In this embodiment, the radiation source 4, the integrated electronic control assembly 5, and the cooling assembly 6 may all be directly mounted at the connection frame 12, which greatly lower machining requirements for the mounting surface. The ring base 11 and the connection frame 12 are cast into an integral part, which has a simple structure, reduces the overall weight, and reduces fabrication costs.

For example, the mounting bosses 125 include first mounting bosses 1251 and second mounting bosses 1252. The first mounting bosses 1251 are disposed across the first reference frame 121 and the second reference frame 122. The radiation source mounting portion 41 includes the two first mounting bosses 1251 that are disposed oppositely. The radiation source 4 is mounted on the two first mounting bosses 1251 through fastening screws. The second mounting bosses 1252 are provided on end surfaces or a side of the first reference frame 121 and the second reference frame 122. The integrated assembly mounting portion 51 and the cooling assembly mounting portion 61 each are provided with four second mounting bosses 1252. The integrated electronic control assembly 5 and the cooling assembly 6 are mounted on the four second mounting bosses 1252 of the mounting portion respectively corresponding to the integrated electronic control assembly 5 and the cooling assembly 6 through fastening screws.

Because the detector assembly 2 needs to receive the X-rays emitted by the radiation source 4, the ring base 11 is provided with a ray emitting slot 111 and a ray receiving slot 112. The ray emitting slot 111 is in communication with the radiation source mounting portion 41. The detector mounting portion is in communication with the ray receiving slot 112. The X-rays emitted by the radiation source 4 passes through the ray emitting slot 111 and the ray receiving slot 112 to the detector assembly 2.

Generally, when the radiation source 4 emits X-rays, a fan-shaped body starting from the emitting point of the radiation source 4 is formed. Therefore, to ensure that all the X-rays can be received, the detector assembly 2 usually occupies a large space on the outer peripheral wall of the connection frame 12, and the ray receiving slot 112 also occupies a large space on the outer peripheral wall of the ring base 11. In this way, a large opening is formed on the ring base 11, thereby reducing the rigidity and strength of the ring base 11.

To solve the foregoing problem, the detector mounting portion provided in this embodiment includes a plurality of detector sub-mounting portions sequentially disposed along a circumferential direction of the ring base 11. A separating structure is disposed between every two adjacent detector sub-mounting portions. The detector assembly includes a plurality of detection units. The plurality of detection units are mounted on the plurality of detector sub-mounting portions in one-to-one correspondence. The detector mounting portion is divided into the plurality of detector sub-mounting portions, and the separating structure between the detector sub-mounting portions is mounted over the larger ray receiving slot 112. In this way, the rigidity and strength of the connection base 1 can be increased.

In this embodiment, the plurality of detection units include a main detection unit 21 and two auxiliary detection units 22. The main detection unit 21 is mounted on the main detector mounting portion 14, and the auxiliary detection units 22 are mounted on the auxiliary detector mounting portions 15. Each of the auxiliary detection units 22 is correspondingly provided with a mounting base 3. The auxiliary detection unit 22 is mounted in the mounting base 3. The mounting base 3 is detachably connected to the auxiliary detector mounting portion 15. The plurality of detector sub-mounting portions include a main detector mounting portion 14 and two auxiliary detector mounting portions 15. The two auxiliary detector mounting portions 15 are respectively disposed on two sides of the main detector mounting portion 14. For example, the separating structure includes an end plate 123. The end plate 123 is mounted over the ray receiving slot 112. The main detector mounting portion 14 is formed between the two end plates 123. Two ends of the end plate 123 are respectively connected to the first reference frame 121 and the second reference frame 122 and mounted over the ray receiving slot 112, which can avoid the reduction in rigidity and strength of the connection frame 12 due to the excessively large opening of the ray receiving slot 112.

In other embodiments, the number of the detection units may be five, seven, nine, or the like, as long as the main detection unit 21 serves as the center of symmetry.

For example, the main detection unit 21 includes a plurality of main detection sheets 211, and the plurality of main detection sheets 211 are mounted side by side between the two end plates 123. At the main detector mounting portion 14, a side of the first reference frame 121 and a side of the second reference frame 122 that are close to each other each are provided with a support plate 126. Two ends of each main detection sheet 211 are respectively connected to the support plate 126 through fastening screws.

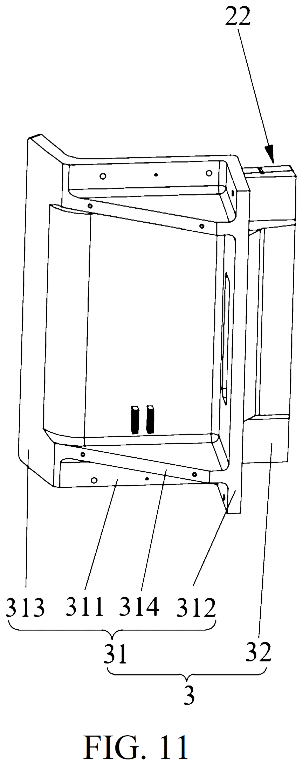

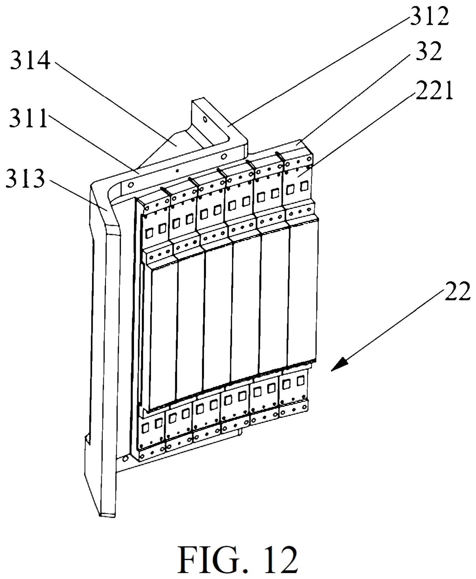

As shown in FIG. 11 and FIG. 12, the mounting base 3 includes a base body 31 and a carrying plate 32. The auxiliary detection unit 22 includes a plurality of auxiliary detection sheets 221. The plurality of auxiliary detection sheets 221 are mounted side by side on the carrying plate 32. The auxiliary detection unit 22 is mounted on the carrying plate 32. The carrying plate 32 is disposed on the base body 31. The base body 31 is detachably connected to the auxiliary detector mounting portion 15. An end surface of the first reference frame 121 and an end surface of the second reference frame 122 that are located on the auxiliary detector mounting portion 15 are matched with the base body 31 in shape, so that the base body 31 can be fixed to the end surface of the first reference frame 121 and the end surface of the second reference frame 122 through the fastening screws.

To effectively shield the X-rays emitted by the radiation source 4 and avoid the X-rays leakage, the detector assembly 2 further includes a cover 7. The cover 7 covers the main detection unit 21 and the base body 31, and the cover 7 is connected to the end surface of the first reference frame 121 and the end surface of the second reference frame 122 that are located on the main detector mounting portion 14, and the base body 31 through fastening screws.

Due to different requirements of examined objects, the CT scanner is provided with a standard arc detection optical path and a non-standard arc detection optical path. Typically, different rotating devices 300 are required to respectively adapt to the standard arc detection optical path and the non-standard arc detection optical path, resulting in increased costs.

According to the connection base 1 provided in this embodiment, by changing the mounting base 3, the arc where the auxiliary detection unit 22 is located and the arc where the main detection unit 21 is located can be located on either the same arc line or different arc lines. By changing the structure of the mounting base 3 and increasing or reducing the thickness of the mounting base 3, the arc where the auxiliary detection unit 22 is located and the arc where the main detection unit 21 is located can be located on either the same arc line or different arc lines by changing the mounting base 3, so as to adapt to different detection optical paths. In this way, one connection base 1 is compatible with both the standard arc detection optical path and the non-standard arc detection optical path, thereby providing better universality and reducing the costs.

For example, the carrying plate 32 is detachably connected to the base body 31. By changing carrying plates 32 with different thicknesses, the arc where the auxiliary detection unit 22 is located and the arc where the main detection unit 21 is located can be located on either the same arc line or different arc lines. For example, if the arc where the auxiliary detection unit 22 is located and the arc where the main detection unit 21 is located are located on the same arc line, the thickness of the carrying plate 32 is h. Then, if the arc where the auxiliary detection unit 22 is located is close to the center of the ring base 11 relative to the arc where the main detection unit 21 is located, the thickness of the carrying plate 32 is greater than h. If the arc where the auxiliary detection unit 22 is located is far away from the center of the ring base 11 relative to the arc where the main detection unit 21 is located, the thickness of the carrying plate 32 is less than h.

In this embodiment, the carrying plate 32 is detachably connected to the base body 31, so that the rotating device 300 can be made universal by simply changing the carrying plate 32. In other embodiments, the carrying plate 32 and the base body 31 may be integrally formed, and the rotating device 300 can be made universal by changing the mounting base 3.

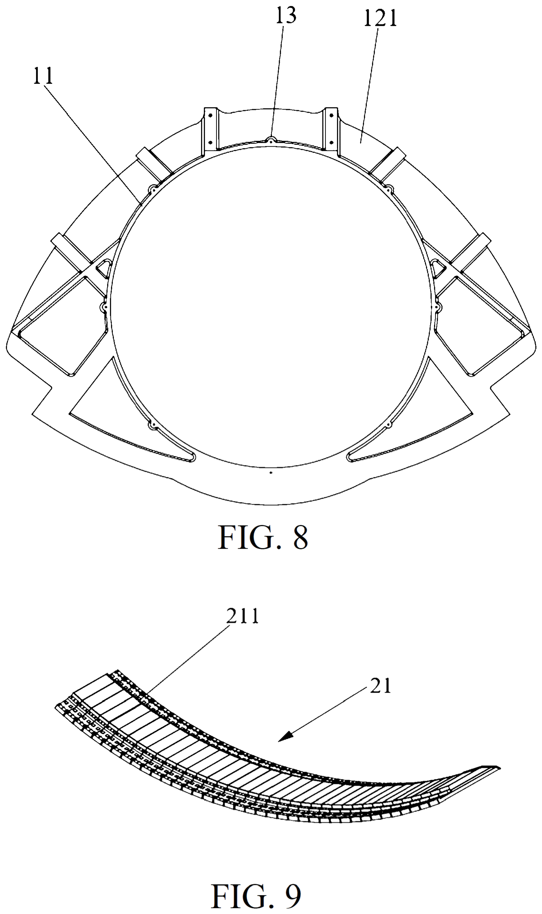

For example, still referring to FIG. 7 and FIG. 8, an insertion limiting slot 124 is formed between the auxiliary detector mounting portion 15 and the end plate 123. The base body 31 is provided with an insertion limiting portion. The insertion limiting portion cooperates with the insertion limiting slot 124 such that the base body 31 is connected into the auxiliary detector mounting portion 15. After the main detection unit 21 is mounted onto the main detector mounting portion 14, the mounting base 3 on which the auxiliary detection unit 22 is mounted is inserted into the auxiliary detector mounting portion 15 from a side of the main detector mounting portion 14. After the mounting base 3 is positioned, the base body 31 is fixed to the auxiliary detector mounting portion 15 through fastening screws.

For example, the base body 31 includes a mounting plate 311, a first connection plate 312, and a second connection plate 313. The carrying plate 32 is detachably connected to the mounting plate 311. The first connection plate 312 is arranged at one end of the mounting plate 311 and disposed perpendicular to the mounting plate 311. The carrying plate 32 protrudes from one end of the mounting plate 311 and forms the insertion limiting portion with the first connection plate 312. The mounting plate 311 is insertion-connected into the insertion limiting slot 124. The first connection plate 312 abuts against the end plate 123. The second connection plate 313 is bent downward from the other end of the mounting plate 311 to abut against the end surfaces of the first reference frame 121 and the second reference frame 122. A connection rib plate 314 is further disposed between the first connection plate 312 and the mounting plate 311, and the cover 7 is connected to the connection rib plate 314.

For example, in this embodiment, there are two connection rib plates 314 that are disposed oppositely. The two connection rib plates 314 each are provided with threaded holes, and a fastening screw passes through the cover 7 and is screwed to the threaded hole in the connection rib plate 314.

The X-rays emitted by the radiation source 4 pass through the ray emitting slot 111 and the ray receiving slot 112 and are received by the detector assembly 2. The ray emitting slot 111 is a first constraint limit of the X-rays, and the ray receiving slot 112 is a second constraint limit of the X-rays. Generally, an inner peripheral wall of the ring base 11 has a small quantity of scattered X-rays. To better shield the X-rays and prevent X-rays leakage from harming human health, an inner wall of the ray emitting slot 111 and an inner wall of the ray receiving slot 112 are both provided with a first ray shielding coating, and an inner peripheral wall of the ring base 11 is provided with a second ray shielding coating. The thickness of the first ray shielding coating is greater than the thickness of the second ray shielding coating. In this embodiment, the ray shielding coating is a lead coating.

For example, the inner peripheral wall of the ring base 11 is provide as a smooth surface. The smooth surface facilitates the application of the second ray shielding coating and can reduce the amount of lead used.

For example, the ray emitting slot 111 and the ray receiving slot 112 are both located between the first reference frame 121 and the second reference frame 122. The ray emitting slot 111 and the ray receiving slot 112 each include a first side wall and a second side wall that are disposed at an interval along an axial direction of the ring base 11. The first side wall is parallel to a side wall of the first reference frame 121, and the second side wall is parallel to a side wall of the second reference frame 122.

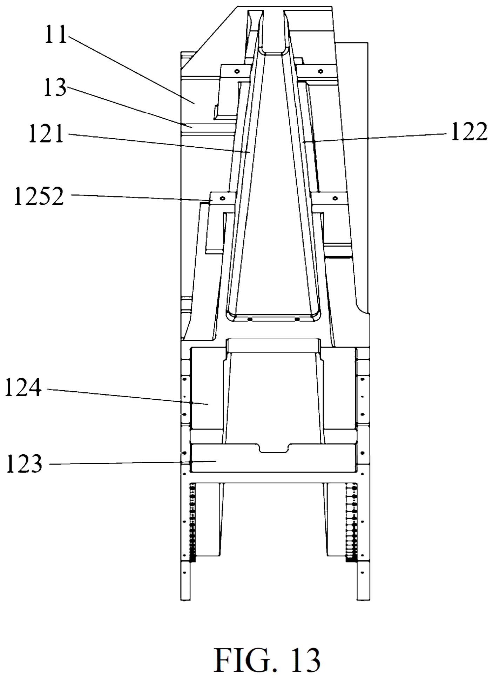

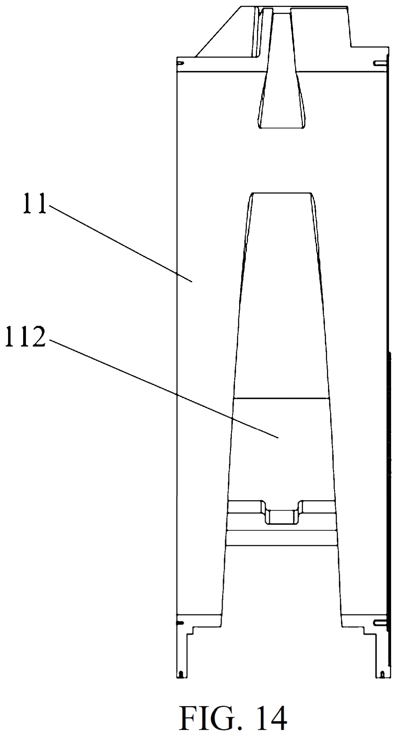

As shown in FIG. 13 and FIG. 14, along the axial direction of the ring base 11, the first reference frame 121 and the second reference frame 122 are disposed at a preset angle, and both the first reference frame 121 and the second reference frame 122 extend from a central point of the radiation source mounting portion 41 toward the main detector mounting portion 14. In this way, the distance between the first reference frame 121 and the second reference frame 122 increases gradually toward the detector mounting portion, thereby satisfying the mounting of the detector assembly 2. Because the first ray shielding coating applied to the inner wall of the ray emitting slot 111 and the inner wall of the ray receiving slot 112 is thick, the shape of the ray emitting slot 111 and the shape of the ray receiving slot 112 determine the applied area of the first ray shielding coating. By disposing the first reference frame 121 and the second reference frame 122 at a preset angle which is set according to the cone angle of the X-rays emitted by the radiation source 4, all the X-rays emitted from the radiation source 4 can pass through the ray emitting slot 111 and the ray receiving slot 112, and the applied area of the first ray shielding coating is minimized, thereby minimizing the amount of lead used and further reducing the costs.

Because the first reference frame 121 and the second reference frame 122 are disposed at the preset angle, to satisfy the mounting portions of the radiation source 4, the integrated electronic control assembly 5, and the cooling assembly 6, the second mounting bosses 1252 of the radiation source mounting portion 41, the integrated assembly mounting portion 51, and the cooling assembly mounting portion 61 are disposed on the side of the first reference frame 121 and the side of the second reference frame 122 that are away from each other.

In addition, the distance between the first reference frame 121 and the second reference frame 122 decreases gradually toward the radiation source mounting portion 41. Correspondingly, the distance between the first reference frame 121 and an end of the ring base 11 corresponding thereto and the distance between the second reference frame 122 and an end of the ring base 11 corresponding thereto increase gradually. An end of the ring base 11 close to the second reference frame 122 is connected to the slip ring bearing 102. The end of the ring base 11 connected to the slip ring bearing 102 is provided with a plurality of threaded holes at intervals, and is connected to the slip ring bearing 102 through the plurality of threaded holes. To ensure the rigidity and strength of the ring base 11, the ring base 11 is provided with a rib 13 extending from the first reference frame 121 to an end of the ring base 11 corresponding thereto.

According to the rotating device for a CT scanner provided in this embodiment, by using the connection base 1 that is highly integrated and cast, the radiation source 4, the integrated electronic control assembly 5, and the cooling assembly 6 are all directly mounted on the connection frame 12, so as to minimize the adapters, reduce the number and types of mounting pieces, and implement the lightweight design of the rotating device 300. Correspondingly, the loads of the slip ring bearing 102 and the support frame 101 in the fixed device 100 of the CT scanner using the rotating device 300 are reduced, and the driving device 200 can use the driving motor 201 with a smaller power, thereby implementing the lightweight design of the CT scanner and greatly reducing the costs of the CT scanner.

The CT scanner provided in this embodiment using the foregoing rotating device for a CT scanner is easy to fabricate and manufacture, and can ensure the rigidity and strength of the rotating device 300. In addition, the CT scanner is applicable to both the standard arc detection optical path and the non-standard arc detection optical path and has better universality, thereby reducing the costs of the CT scanner.

The rotating device for a CT scanner provided in this application includes the connection base and the detector assembly. The connection base is the ring base of which the outer peripheral wall is surrounded by the connection frame. The mounting portion is disposed on the connection frame. The mounting portion includes the detector mounting portion. The detector assembly is disposed on the detector mounting portion. The detector mounting portion is in communication with the ray receiving slot. The detector mounting portion includes the plurality of detector sub-mounting portions sequentially disposed along the circumferential direction of the ring base. The separating structure is disposed between every two adjacent detector sub-mounting portions. Because the ray receiving slot occupies a large space, the opening of the ring base is large, resulting in reduced rigidity and strength of the ring base. As a result, the detector mounting portion is divided into the plurality of detector sub-mounting portions, and separating structure between the detector sub-mounting portions is mounted over the larger ray receiving slot, so that the rigidity and strength of the connection base can be increased.

The detector assembly includes the main detection unit and the two auxiliary detection units. The main detection unit is disposed on the main detector mounting portion. The auxiliary detection units are mounted on the auxiliary detector mounting portions through the mounting bases. The mounting base is detachably connected to the auxiliary detector mounting portion. In this way, by changing the mounting base, the mounting base can be either heightened or lowered, so that the arc where the auxiliary detection unit is located and the arc where the main detection unit is located can be located on either the same arc line or different arc lines so as to adapt to different detection light paths. In this way, one connection base is compatible with both the standard arc detection optical path and the non-standard arc detection optical path, thereby providing better universality and reducing the costs.

The CT scanner provided in this application includes the fixed device and the foregoing rotating device. The rotating device is simple in structure and easy to cast, and does not compromise the rigidity and strength of the rotating device. In addition, the detector assembly of the rotating device is divided into the main detection unit and the two auxiliary detection units, and the auxiliary detection units are mounted on the auxiliary detector mounting portions through the mounting bases. In this way, the auxiliary detection units and the main detection unit can be located on either the same arc line or different arc lines by changing the mounting base so as to be compatible with both the standard arc detection optical path and the non-standard arc detection optical path, thereby providing better universality and reducing the costs of the CT scanner.

### Embodiment II:

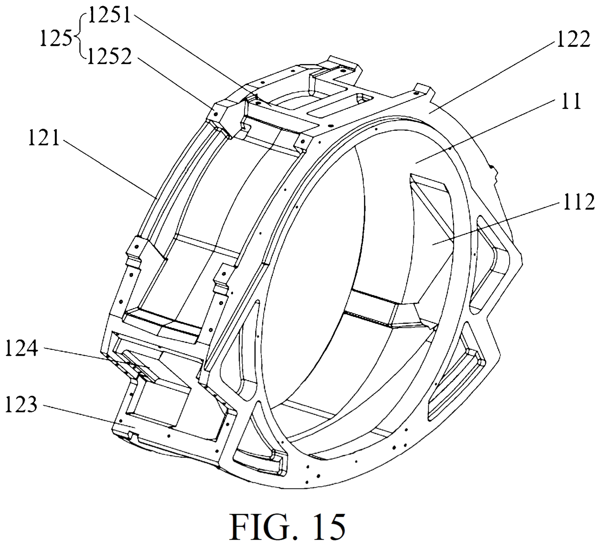

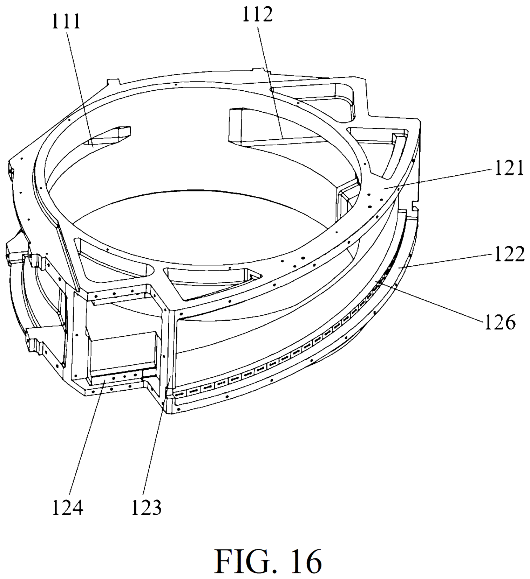

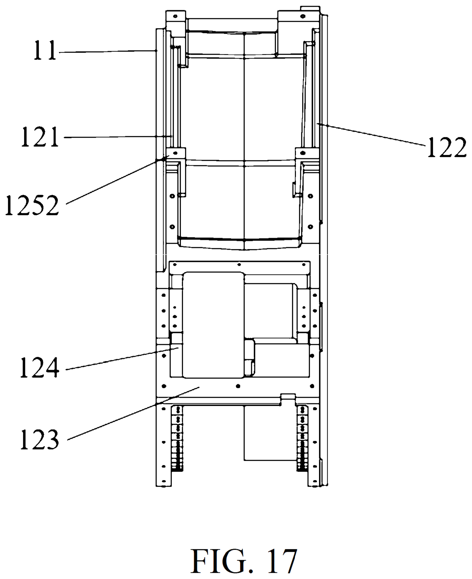

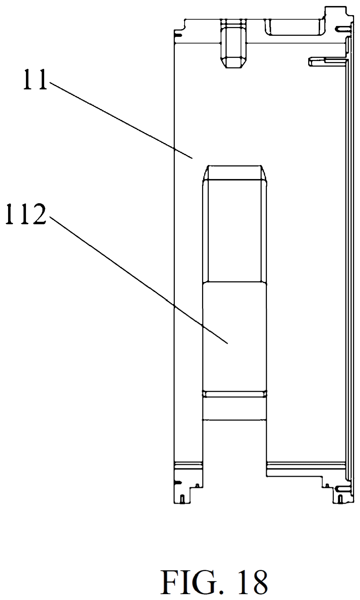

This embodiment provides a rotating device for a CT scanner, applied to the CT scanner in Embodiment 1. The structure of the rotating device for a CT scanner provided in this embodiment is basically the same as that of the rotating device for a CT scanner provided in Embodiment I, and details about the same structure are not described herein again. The rotating device for a CT scanner provided in this embodiment is different from the rotating device for a CT scanner provided in Embodiment I in that:
As shown in FIG. 15 to FIG. 18, along the axial direction of the ring base 11, the first reference frame 121 and the second reference frame 122 are disposed in parallel. Correspondingly, when viewed from the side, the ray emitting slot 111 and the ray receiving slot 112 are both rectangular.

In this embodiment, the second mounting bosses 1252 are disposed on the end surfaces of the first reference frame 121 and the second reference frame 122. To facilitate the mounting of the radiation source 4, the end surfaces of the first reference frame 121 and the second reference frame 122 between the two first mounting bosses 1251 are machined into horizontal planes.

## Claims

1. A rotating device for a computed tomography (CT) scanner, comprising:
a connection base (1), comprising a ring base (11) and a connection frame (12), the connection frame (12) being disposed around an outer peripheral wall of the ring base (11), and a mounting portion being disposed on the connection frame (12); and
a detector assembly (2), the mounting portion comprising a detector mounting portion, the detector assembly (2) being disposed at the detector mounting portion, a ray receiving slot (112) being provided on the ring base (11), and the detector mounting portion being in communication with the ray receiving slot (112),
the detector mounting portion comprising a plurality of detector sub-mounting portions sequentially disposed along a circumferential direction of the ring base (11), a separating structure being disposed between every two adjacent detector sub-mounting portions, and the detector assembly (2) comprises a plurality of detection units, the plurality of detection units being mounted on the plurality of detector sub-mounting portions in one-to-one correspondence.

2. The rotating device according to claim 1, wherein the plurality of detector sub-mounting portions comprise a main detector mounting portion (14) and two auxiliary detector mounting portions (15), and the two auxiliary detector mounting portions (15) are respectively disposed on two sides of the main detector mounting portion (14); and
the separating structure comprises an end plate (123), the end plate (123) being mounted over the ray receiving slot (112), and the main detector mounting portion (14) being formed between the two end plates (123).

3. The rotating device according to claim 2, wherein the plurality of detection units comprise a main detection unit (21) and two auxiliary detection units (22), the main detection unit (21) being mounted on the main detector mounting portion (14), and the auxiliary detection units (22) being mounted on the auxiliary detector mounting portions (15); and
each of the auxiliary detection units (22) is correspondingly provided with a mounting base (3), the auxiliary detection unit (22) being mounted in the mounting base (3), and the mounting base (3) being detachably connected to the auxiliary detector mounting portion (15).

4. The rotating device according to claim 3, wherein the mounting base (3) comprises a base body (31) and a carrying plate (32), the auxiliary detection unit (22) being mounted on the carrying plate (32), the carrying plate (32) being disposed on the base body (31), and the base body (31) being detachably connected to the auxiliary detector mounting portion (15).

5. The rotating device according to claim 4, wherein the carrying plate (32) is detachably connected to the base body (31).

6. The rotating device according to claim 4, wherein the detector assembly (2) further comprises a cover (7), and the cover (7) covers the main detection unit (21) and the base body (31).

7. The rotating device according to claim 6, wherein an insertion limiting slot (124) is formed between the auxiliary detector mounting portion (15) and the end plate (123), the base body (31) is provided with an insertion limiting portion, and the insertion limiting portion cooperates with the insertion limiting slot (124) such that the base body (31) is connected into the auxiliary detector mounting portion (15).

8. The rotating device according to claim 7, wherein the base body (31) comprises a mounting plate (311), a first connection plate (312), and a second connection plate (313), the carrying plate (32) being detachably connected to the mounting plate (311), the first connection plate (312) being arranged at one end of the mounting plate (311) and disposed perpendicular to the mounting plate (311), the carrying plate (32) protruding from one end of the mounting plate (311) and forming the insertion limiting portion with the first connection plate (312), the mounting plate (311) being insertion-connected into the insertion limiting slot (124), and the first connection plate (312) abutting against the end plate (123); and the second connection plate (313) is bent downward from the other end of the mounting plate (311) to abut against an end surface of a connection frame (12).

9. The rotating device according to claim 8, wherein a connection rib plate (314) is further disposed between the first connection plate (312) and the mounting plate (311), and the cover (7) is connected to the connection rib plate (314).

10. The rotating device according to any one of claims 2 to 9, wherein the rotating device further comprises a radiation source (4), and the radiation source (4) is configured to emit X-rays; and the mounting portion further comprises a radiation source mounting portion (41), the radiation source mounting portion (41) and the main detector mounting portion (14) being disposed oppositely on an outer peripheral wall of the ring base (11), and the radiation source (4) being mounted on the radiation source mounting portion (41); and
the ring base (11) is further provided with a ray emitting slot (111), the ray emitting slot (111) being in communication with the radiation source mounting portion (41), and the X-rays emitted by the radiation source (4) pass through the ray emitting slot (111) and the ray receiving slot (112) to the detector assembly (2).

11. The rotating device according to claim 10, wherein the connection frame (12) comprises a first reference frame (121) and a second reference frame (122), the first reference frame (121) and the second reference frame (122) both surrounding the outer peripheral wall of the ring base (11) and being disposed at an interval along an axial direction of the ring base (11), and the mounting portion being formed between the first reference frame (121) and the second reference frame (122); and
the ray emitting slot (111) and the ray receiving slot (112) are both located between the first reference frame (121) and the second reference frame (122), and the ray emitting slot (111) and the ray receiving slot (112) each comprise a first side wall and a second side wall that are disposed at an interval along the axial direction of the ring base (11), the first side wall being parallel to a side wall of the first reference frame (121), and the second side wall being parallel to a side wall of the second reference frame (122).

12. The rotating device according to claim 11, wherein along the axial direction of the ring base (11), the first reference frame (121) and the second reference frame (122) are disposed in parallel.

13. The rotating device according to claim 11, wherein along the axial direction of the ring base (11), the first reference frame (121) and the second reference frame (122) are disposed at a preset angle, and both the first reference frame (121) and the second reference frame (122) extend from a central point of the radiation source mounting portion (41) toward the main detector mounting portion (14).

14. The rotating device according to claim 12 or 13, wherein an inner wall of the ray emitting slot (111) and an inner wall of the ray receiving slot (112) are both provided with a first ray shielding coating, and an inner peripheral wall of the ring base (11) is provided with a second ray shielding coating, the thickness of the first ray shielding coating being greater than the thickness of the second ray shielding coating.

15. The rotating device according to claim 14, wherein the inner peripheral wall of the ring base (11) is provided as a smooth surface.

16. The rotating device according to claim 11, wherein the rotating device further comprises an integrated electronic control assembly (5) and a cooling assembly (6), the integrated electronic control assembly (5) being configured to control the radiation source (4) and provide electric energy, and the cooling assembly (6) being configured to dissipate heat for the radiation source (4); and
the mounting portion further comprises an integrated assembly mounting portion (51) and a cooling assembly mounting portion (61), the integrated assembly mounting portion (51) and the cooling assembly mounting portion (61) being respectively located on two sides of the radiation source mounting portion (41), the integrated electronic control assembly (5) being disposed at the integrated assembly mounting portion (51), and the cooling assembly (6) being disposed at the cooling assembly mounting portion (61).

17. The rotating device according to claim 16, wherein the mounting portion comprises a plurality of mounting bosses (125), and the radiation source (4), the integrated electronic control assembly (5), and the cooling assembly (6) are all mounted on the mounting bosses (125).

18. The rotating device according to claim 17, wherein the mounting bosses (125) comprise first mounting bosses (1251) and second mounting bosses (1252), the first mounting bosses (1251) being disposed across the first reference frame (121) and the second reference frame (122), the radiation source mounting portion (41) comprising two of the first mounting bosses (1251) that are disposed oppositely, and the radiation source (4) being mounted on the two first mounting bosses (1251); and
the second mounting bosses (1252) are disposed on end surfaces or one side of the first reference frame (121) and the second reference frame (122), the integrated assembly mounting portion (51) and the cooling assembly mounting portion (61) each are provided with four of the second mounting bosses (1252), and the integrated electronic control assembly (5) and the cooling assembly (6) are respectively mounted on the four second mounting bosses (1252).

19. A computed tomography (CT) scanner, comprising a fixed device (100) and the rotating device for a CT scanner according to any one of claims 1 to 18, the fixed device (100) comprising a support frame (101) and a slip ring bearing (102), the support frame (101) being provided with a mounting hole (1011), the slip ring bearing (102) being disposed in the mounting hole (1011), and the slip ring bearing (102) being connected to the rotating device.
